# EUROPEAN PATENT APPLICATION

(11) **EP 4 372 599 A1**
(43) Date of publication of application: **22.05.2024**
(21) Application number: 23199624.0
(22) Date of filing: 26.09.2023
(51) Int. Cl.: G06F 30/17, G06F 30/20, G06F 30/15, G06F 111/20, G06F 113/28

(54) **SYSTEMS AND METHODS FOR PREDICTIVE ASSEMBLY**

(30) Priority: 18.11.2022 US 202263384257 P; 03.04.2023 US 202318194904
(71) Applicant: The Boeing Company, Arlington, VA 22202 (US)
(72) Inventor: Rennison, Ben, Arlington, 22202 (US); Freeman, Philip L., Arlington, 22202 (US); Lazar, Constantin C., Arlington, 22202 (US); Smoot, Colton M., Arlington, 22202 (US); Ellis Branyon III, Charlie, Arlington, VA 22202 (US)
(74) Representative: Witte, Weller & Partner Patentanwälte mbB

(57) **Abstract**

A computer-implemented system for predictive assembly includes a model generator and a model analyzer. The model generator generates a first model of a first component and a second model of a second component before the first component and the second component are coupled together. The model analyzer analyzes the first model and the second model to determine dimensions of a space between a first mating surface of the first component and a second mating surface of the second component after the first component and the second component are coupled together.

## Description

### FIELD

The present disclosure relates generally to predictive assembly and, more particularly, to systems and methods for predictive assembly using a machined surface or filler material, such as a shim.

### BACKGROUND

Various surfaces are mated when components are coupled together during manufacture of an object. In some cases, one or more gaps are present between the mated surfaces. It may be desirable to substantially fill these gaps using a filler material. The process of filling these gaps using a filler material, such as shims, is typically called "shimming" or "fettling." Conventional shimming methods include mating the surfaces, taking measurements of the gaps between the mated surfaces, and fabricating shims based on the gap measurements. Predictive assembly is a process of predicting the filler material needed to fill the gaps between mated surfaces. For example, surface geometries of the components are measured, the geometry information is used to determine the dimensions of the gaps that will be present between the mated surfaces, and the filler material is fabricated based on the determined dimensions. However, conventional predictive assembly methods may be unable to adequately predict the dimensions of the gaps between mated surfaces, such as when one or more of the components has a geometry during measurement that is different than its geometry after being coupled to another component. Accordingly, those skilled in the art continue with research and development efforts in the field of predictive assembly.

### SUMMARY

According to the present disclosure, a system for predictive assembly, a method for predictive assembly, a computer program product for predictive assembly, and a method for sizing and/or fabricating a filler as defined in the independent claims are provided. Further embodiments of the claimed invention are defined in the dependent claims. Although the claimed invention is only defined by the claims, the below embodiments, examples, and aspects are present for aiding in understanding the background and advantages of the claimed invention.

In an example, the disclosed system includes a model generator that generates a first model of a first component and a second model of a second component before the first component and the second component are coupled together. The system also includes a model analyzer that analyzes the first model and the second model to determine dimensions of a space between a first mating surface of the first component and a second mating surface of the second component after the first component and the second component are coupled together.

In an example, the disclosed method is performed using an example of the discloses system.

In an example, the disclosed method includes steps of:(1) generating a first model of a first component and a second model of a second component before the first component and the second component are coupled together; and (2) analyzing the first model and the second model to determine a dimension of a space between a first mating surface of the first component and a second mating surface of the second component after the first component and the second component are coupled together.

In an example, the disclosed system implements the disclosed method.

In an example, a filler is fabricated according to the disclosed method.

In an example, a portion of an aircraft, including a filler, is fabricated according to the disclosed method.

In an example, the disclosed computer program product includes a non-transitory computer-readable medium including program code 918 that, when executed by one or more processors, causes the one or more processors to perform operations including: (1) generating a first model of a first component from first data before the first component is coupled to a second component; (2) generating a second model of a second component from second data before the second component is coupled to the first component; and (3) analyzing the first model and the second model to determine dimensions of a space between a first mating surface of the first component and a second mating surface of the second component after the first component and the second component are coupled together.

In an example, the disclosed method includes steps of: (1) generating a first model of a first component and a second model of a second component before the first component and the second component are coupled together; (2) filtering out a deformation of at least one of the first component and the second component before the first component and the second component are coupled together; and (3) determining a dimension of a filler that fits between a first mating surface of the first component and a second mating surface of the second component after the first component and the second component are coupled together.

Other examples of the disclosed system, methods, and computer program product will become apparent from the following detailed description, the accompanying drawings, and the appended claims.

### BRIEF DESCRIPTION OF THE DRAWINGS

Fig. 1 is a schematic block diagram of an example of a manufacturing environment;
Fig. 2 is a schematic block diagram of an example of an analysis environment;
Fig. 3 is a schematic illustration of an example of an aircraft;
Fig. 4 is a schematic illustration of an example of a portion of an object manufactured by joining components;
Fig. 5 is a graphical illustration of an example of a portion of a first model representing a first component and a second model representing a second component;
Fig. 6 is a graphical illustration of an example of a portion of the first model representing the first component and the second model representing a second component;
Fig. 7 is a graphical illustration of an example of a portion of a modified nominal model representing the first component and the second model representing a second component;
Fig. 8 is a graphical illustration of an example of an overall deviation between a first model and a nominal model in an XYZ-coordinate system;
Fig. 9 is a graphical illustration of an example of the overall deviation between the first model and the nominal model in an UVW-coordinate system;
Fig. 10 is a graphical illustration of an example of a form deviation between the first model and the nominal model in the UVW-coordinate system;
Fig. 11 is a graphical illustration of an example of a waviness deviation between the first model and the nominal model in the UVW-coordinate system;
Fig. 12 is a graphical illustration of an example of the waviness deviation between the first model and the nominal model in the XYZ-coordinate system;
Fig. 13 is a flow diagram of an example of a method for predictive assembly;
Fig. 14 is a flow diagram of an example of a method for sizing a filler;
Fig. 15 is a block diagram of an example of a data processing system;
Fig. 16 is a flow diagram of an example of an aircraft manufacturing method; and
Fig. 17 is a schematic block diagram of an example of an aircraft.

### DETAILED DESCRIPTION

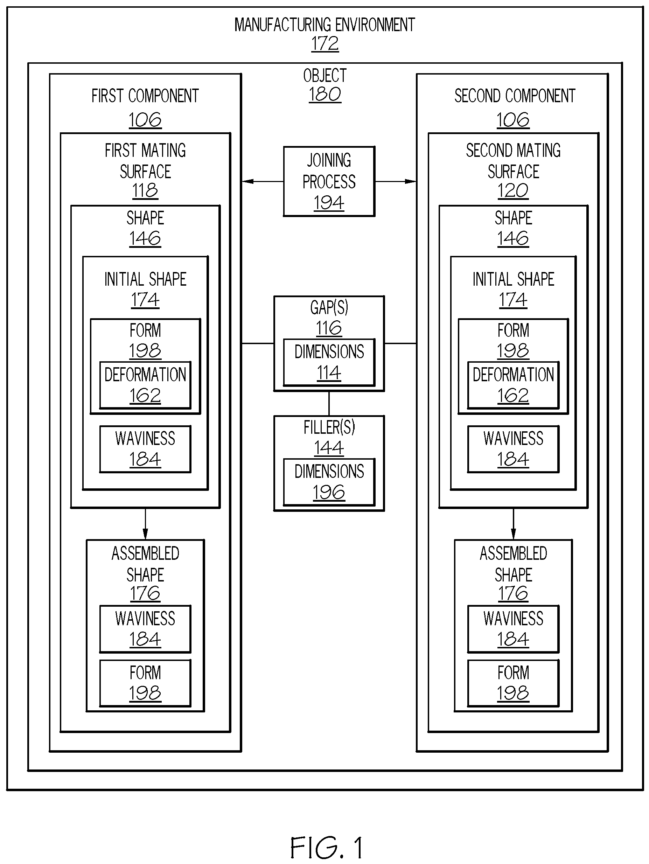

Referring generally to Figs. 1-15, by way of examples, the present disclosure is directed to systems and methods for predictive assembly or predictive shimming. More particularly, the systems and methods are directed to proactive predictive assembly or proactive predictive shimming, which, for the purpose of the present disclosure, refer to improvements in predictive assembly or predictive shimming methodologies by which pre-assembly deformation of a component is removed and a shape of a gap between post-assembly mating surfaces can be predicted such that a filler can be fabricated to substantially fill the gap. As examples, pre-assembly deformation of a component is "filtered out" of three-dimensional (3D) measurement data of the component, thereby enabling the 3D measurement data to be used to proactively predict the dimensions of fillers needed to fill gaps between mating surfaces of joined components.

The present disclosure recognizes that traditional manual shimming methods may not be capable of accurately capturing variations in the surfaces of components being joined. The present disclosure also recognizes that it is desirable to have systems and methods for predicting the shapes of filler members or shims needed to fill the gaps between two surfaces that have been mated in which at least one of these surfaces exhibits some degree of deformation. Further, traditional predictive assembly or predictive shimming methods may not be capable of sufficiently accounting for deformation of a component when it is measured, thereby resulting in excessively thick shims. The disclosed systems and methods utilize data filtering, such as a robust Gaussian areal regression filter, on 3D measurement data representing the component to robustly filter out the deformation of the component, while preserving waviness (e.g., peaks and valleys) of a mating surface relevant to gap filling or shimming. The shape representing the waviness is offset to produce a minimum thickness filler that is then fabricated prior to component assembly. The filler accurately fills the local variation between the two components and substantially reduces the need for additional filler material or shimming to fill all gaps between adjacent structures.

Referring to Fig. 1, which illustrates an example of a manufacturing environment 172. The manufacturing environment 172 is an example of a manufacturing environment in which an object 180 is manufactured.

Referring to Fig. 1, in one or more examples, the object 180 includes, or is manufactured using, at least a first component 106 and a second component 110. In various other examples, any number of other components may also be used to form or manufacture the object 180. The first component 106 includes a first mating surface 118 and the second component 110 includes a second mating surface 120. As used herein, a "surface" refers to a continuous surface or a discontinuous surface formed of multiple surfaces.

Referring to Fig. 1, in one or more examples, the first component 106 and the second component 110 are joined, attached, or otherwise coupled together such that the first mating surface 118 and the second mating surface 120 are mated together. For example, the first component 106 and the second component 110 are joined and, thus, the first mating surface 118 and the second mating surface 120 are mated using any suitable joining process 194.

Referring to Fig. 1, in one or more examples, the joining process 194 includes any number of operations configured to physically attach the first component 106 and the second component 110 such that first mating surface 118 and the second mating surface 120 are mated together. For example, without limitation, the joining process 194 may include at least one of securing, bonding, mounting, welding, fastening, pinning, stitching, stapling, tying, gluing, or otherwise coupling the first component 106 and the second component 110 together.

Referring to Fig. 1, in one or more examples, the first component 106 and the second component 110 are made from any suitable material or combination of materials. In one or more examples, the first component 106 and the second component 110 are made from the same material. In one or more examples, the first component 106 and the second component 110 are made from different materials. For example, without limitation, the first component 106 and the second component 110 may be made from metallic materials, composite materials, polymeric materials, combinations thereof, and the like.

Referring to Fig. 1, in one or more examples, each of the first component 106 and the second component 110 and, thus, each one of the first mating surface 118 and the second mating surface 120 has a shape 146. As used herein, a "shape" of a component or a surface refers to the geometry of the component or the surface, the dimensions of the component or the surface, and the morphology of the component or the surface. For example, the shape of a component or a surface may be the three-dimensional shape (e.g., shape 146) of the component or the surface. In one or more examples, the shape 146 includes form 198 and waviness 184. As used herein, "form" refers to the gross or global shape of a component or surface and "waviness" refers to local variations or undulations in the shape of a component or surface.

Referring to Fig. 1, in one or more examples, the shape 146 of one or more of the first component 106 and the second component 110 and, thus, one or more of the first mating surface 118 and the second mating surface 120 may change throughout the assembly process of the object 180. As such, each of the first component 106 and the second component 110 and, thus, each one of the first mating surface 118 and the second mating surface 120 may have an initial shape 174 (e.g., the shape 146 before the joining process 194) and an assembled shape 176 (e.g., the shape 146 after the joining process 194).

Referring to Fig. 1, in one or more examples, at least one of the first component 106 and the second component 110 and, thus, at least one of the first mating surface 118 and the second mating surface 120 may experience or exhibit some degree of deformation 162 in the shape 146. As used herein, "deformation" refers to a temporary variation in the form 198 of the shape 146. In the examples disclosed herein, the deformation 162 is substantially removed from the shape 146 of a component after or as a result of assembly of the object 180 (e.g., after the joining process 194). As an example, the deformation 162 is represented in the initial shape 174 and is not represented in the assembled shape 176.

Referring to Fig. 1, in one or more examples, the first component 106 is susceptible to experiencing or exhibiting some degree of deformation 162 (e.g., global deformation) after manufacturing such that the first mating surface 118 also exhibits some degree of deformation 162. For example, the first component 106 may be flexible such that the first mating surface 118 is also flexible. As an example, the first component 106 may temporarily bend, deform, flex, sag, or otherwise change shape without causing any undesired permanent effects to the first component 106 or the first mating surface 118. This temporary change in shape (e.g., deformation 162) may be due to a number of factors, such as the size, geometry, weight, etc. of the first component 106 after it is manufactured boundary conditions, gravity, and the like. Consequently, in these examples, the shape 146 of the first component 106 and, thus, the first mating surface 118 may change throughout the manufacturing process of the object 180. For example, the first component 106 and, thus, the first mating surface 118 may have the initial shape 174 before assembly of the object 180 and the assembled shape 176 after assembly of the object 180. In these examples, the initial shape 174 and the assembled shape 176 are different and are a result of the deformation 162.

Referring to Fig. 1, in one or more examples, the second component 110 is not susceptible to experiencing or exhibiting deformation 162 after manufacturing such that the second mating surface 120 also does not exhibit deformation 162. For example, the second component 110 may be rigid such that the second mating surface 120 is also rigid. As an example, the second component 110 may be unable to bend, deform, flex, sag, or otherwise change shape without causing any undesired permanent effects to the second component 110 or the second mating surface 120. Consequently, the shape 146 of the second component 110 and, thus, the second mating surface 120 may not change throughout the manufacturing process of the object 180. For example, the second component 110 and, thus, the second mating surface 120 may have the initial shape 174 before assembly of the object 180 and the assembled shape 176 after assembly of the object 180. In these examples, the initial shape 174 and the assembled shape 176 are the same.

Referring to Fig. 1, in one or more examples, the second component 110 provides or serves as a supporting structure for the object 180 to which the first component 106 is coupled. Accordingly, the first component 106 and, thus, the first mating surface 118 have the assembled shape 176 after coupling the first component 106 and the second component 110 together. For example, fit-up forces may pull the deformation 162 out of the first component 106 during assembly of the object 180. The magnitude of the difference between the initial shape 174 and the assembled shape 176 may be due to a number of factors, such as the loads and/or forces applied to the first component 106 during the joining process 194, a number of attachment points between the first component 106 and the second component 110, the orientation of the first component 106 and/or the second component 110, and other factors that may affect the shape 146 of the first component 106 before, during, and/or after the joining process 194.

Referring to Fig. 1, in other examples, the second component 110 is susceptible to experiencing or exhibiting some degree of deformation 162 (e.g., global deformation) after manufacturing such that the second mating surface 120 also exhibits some degree of deformation 162. For example, the second component 110 may be flexible such that the second mating surface 120 is also flexible. As an example, the second component 110 may temporarily bend, deform, flex, sag, or otherwise change shape without causing any undesired permanent effects to the second component 110 or the second mating surface 120. This temporary change in shape (e.g., deformation 162) may be due to a number of factors, such as the size, geometry, weight, etc. of the second component 110 after it is manufactured, boundary conditions, gravity, and the like. Consequently, in these examples, the shape 146 of the second component 110 and, thus, the second mating surface 120 may change throughout the manufacturing process of the object 180. For example, the second component 110 and, thus, the second mating surface 120 may have the initial shape 174 before assembly of the object 180 and the assembled shape 176 after assembly of the object 180. In these examples, the initial shape 174 and the assembled shape 176 are different and are a result of the deformation 162.

Referring to Fig. 1, in one or more examples, a number of gaps 116 may be present between the first mating surface 118 and the second mating surface 120. As used herein, a "number of" refers to one or more. In this manner, a number of gaps 116 includes one gap 116 or a plurality of gaps 116. For the purposes of the present disclosure, a "gap" refers to an open space between mated surfaces. Accordingly, the gap 116 may also be referred to as a space.

Referring to Fig. 1, in one or more examples, the gap 116 (e.g., each one of the number of gaps 116) has dimensions 114. Generally, the dimensions 114 of the gap 116 refer to a measurable parameter or shape of the gap 116, such its thickness, length, width, etc. More particularly, the dimensions 114 of the gap 116 refer to the thickness of the gap 116 or the linear distances between the first mating surface 118 and the second mating surface 120.

Referring to Fig. 1, in one or more examples, a number of fillers 144 are situated between the first mating surface 118 and the second mating surface 120 to substantially fill the gaps 116. The filler 144 (e.g., each one of the number of filler 144) has dimensions 196. The dimensions 196 of the filler 144 correspond to or are otherwise based on the dimensions 114 of the gap 116. The filler 144 includes or takes the form of any suitable filler member or filler material suitable to substantially fill one or more of the gaps 116 between mated surfaces, within acceptable tolerances. Depending on the implementation, the filler 144 can be fabricated or manufactured using any suitable process and/or using any suitable material, such as metal, metal alloy, composite, plastic, combinations thereof, and the like. In one or more examples, the filler 144 is or takes the form of a shim.

In some cases, it may be desirable to manufacture the fillers 144 before the joining process 194 and assembly of the object 180. It may also be desirable to manufacture the fillers 144 in a different location than the manufacturing environment 172 where the object 180 is assembled. Therefore, it is desirable to predict the dimensions 114 (e.g., 3D shape information) for the gaps 116 that will be formed between the first mating surface 118 and the second mating surface 120 after the first component 106 and the second component 110 are coupled together.

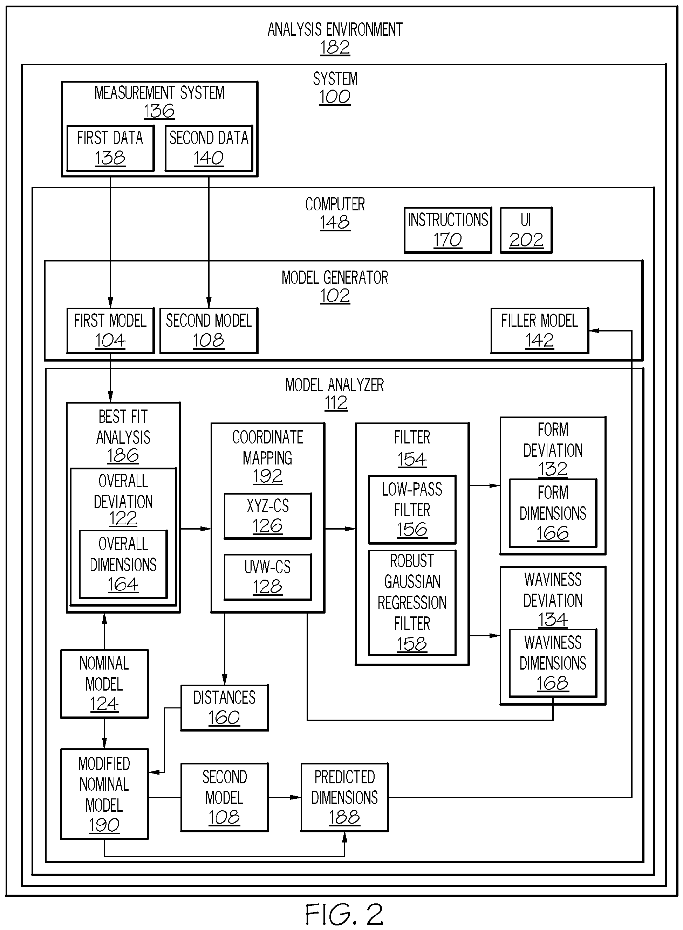

Accordingly, as disclosed herein, a system 100 (Fig. 2) for predictive assembly, or proactive shimming, is used to predict the dimensions 114 of the gaps 116, the number of the gaps 116, and other information related to the gaps 116 and, thus, the dimensions 196 of the fillers 144, the number of fillers 144, and other information related to the fillers 144. The fillers 144 having the dimensions 196 may then be manufactured based on the dimensions 114 of the gaps 116 predicted prior to the joining process 194.

Referring to Fig. 2, which illustrates an example of an analysis environment 182. The analysis environment 182 is an example of an analysis environment in which the system 100 is implemented to proactively predict the dimensions 196 (e.g., 3D shape information) of the fillers 144 (Fig. 1). In one or more examples, the analysis environment 182 is remote from or is at a separate location with respect to the manufacturing environment 172. However, in other examples, at least a portion of the system 100 is located or implemented in the manufacturing environment 172, which at least another portion of the system 100 is located or implemented in the analysis environment 182. In yet other examples, an entirety of the system 100 is implemented in the manufacturing environment 172.

Referring to Fig. 2, in one or more examples, the system 100 includes or is implemented using a computer 148. For example, the system 100 is a computer-implemented system. In one or more examples, the computer 148 executes instructions 170 to perform the operations performed by the system 100. In these examples, the computer 148 may include one or more computers, computing devices, or computing systems. When the computer 148 includes more than one computer, the computers may be in communication with each other using any number of wired, wireless, optical, or other types of communications links.

Referring to Fig. 2, in one or more examples, the system 100 includes a model generator 102. The model generator 102 generates (e.g., is configured or adapted to generate) a first model 104 of the first component 106 (Fig. 1). The model generator 102 also generates (e.g., is configured or adapted to generate) a second model 108 of the second component 110 (Fig. 1).

Referring to Figs. 1 and 2, in one or more examples, the first model 104 is generated before the first component 106 and the second component 110 are coupled together. In one or more examples, the first model 104 represents the first component 106 and, thus, the first mating surface 118 having the initial shape 174. In one or more examples, the initial shape 174 of the first component 106 is different than the assembled shape 176 (e.g., final shape after the joining process 194) and includes the deformation 162 in the shape 146 of the first component 106 (e.g., the first component 106 is flexible).

Referring to Figs. 1 and 2, in one or more examples, the second model 108 is generated before the first component 106 and the second component 110 are coupled together. In one or more examples, the second model 108 represents the second component 110 and, thus, the second mating surface 120 having the initial shape 174. In one or more examples, the initial shape 174 of the second component 110 is the same as the assembled shape 176 (e.g., final shape after the joining process 194) and does not include the deformation 162 in the shape 146 of the second component 110 (e.g., the second component 110 is rigid).

Referring to Fig. 2, in one or more examples, the system 100 includes a model analyzer 112. The model analyzer 112 analyzes (e.g., is configured or adapted to analyze) the first model 104 and the second model 108 to determine (e.g., predict) the dimensions 114 of the gap 116 that will be formed between the first mating surface 118 of the first component 106 and the second mating surface 120 of the second component 110 after the first component 106 and the second component 110 are coupled together (e.g., following the joining process 194).

Accordingly, in instances where mating surfaces of coupled components change shape upon assembly, examples of the system 100 account for a post-assembly shape of a component and predict gap geometry based on a manufactured shape of the component. In one or more examples, the system 100 facilitates proactively removing the deformation 162 from the shape 146 of the first component 106 during a predictive assembly operation. As such, prediction of the dimensions 114 of the gaps 116 that will be formed between the first mating surface 118 and the second mating surface 120 and, thus, prediction of the dimensions 196 of the fillers 144 needed to fill the gaps 116 is performed using an approximation of the assembled shape 176 of the first component 106 (e.g., the final shape after the joining process 194).

Advantages of the disclosed predictive assembly process enabled by the system 100 include, but are not limited to, filling of gaps based on a surface contour of a component, minimizing the thicknesses of fillers used to fill the gaps, accounting for fit-up forces to pull out the deformation (e.g., global deviation) before filler installation, and designing and manufacturing fillers before assembly.

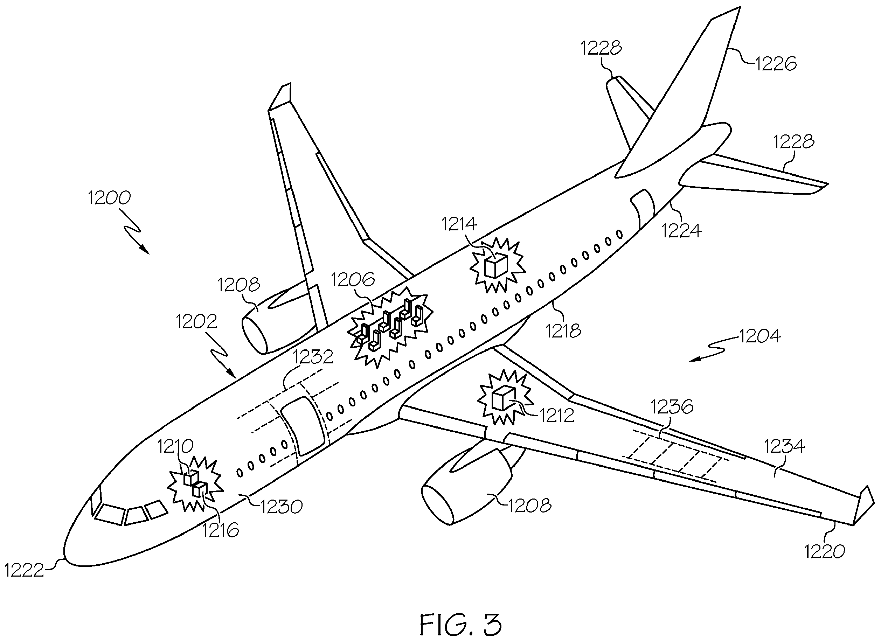

Referring to Fig. 3, which illustrates an example of an aircraft 1200. In one or more examples, the aircraft 1200 includes a fuselage 1218 (e.g., a body) and wings 1220 attached to the fuselage 1218. The aircraft 1200 includes a propulsion system 1208 (e.g., engines), for example, attached to the wings 1220. The fuselage 1218 has a nose section 1222 and a tail section 1224. The aircraft 1200 includes horizontal stabilizers 1228 and a vertical stabilizer 1226 are attached to the tail section 1224.

Referring to Figs. 1 and 3, in one or more examples, the fuselage 1218 is an example of the object 180. The fuselage 1218 includes an exterior barrel 1230 and an interior frame 1232. In these examples, the barrel 1230 is an example of the first component 106 and the frame 1232 of is an example of the second component 110. The frame 1232 is coupled to the barrel 1230 and serves as a support structure for the fuselage 1218. It can be appreciated that, before the frame 1232 is coupled to the barrel 1230, an initial shape of the barrel 1230 may exhibit deformation 162 due to the size and weight of the barrel 1230. After the frame 1232 is coupled to the barrel 1230, the barrel 1230 may have a final shape that is different than the initial shape.

Referring to Figs. 1 and 3, in one or more examples, the wing 1220 is an example of the object 180. The wing 1220 may also be referred to as a wing structure or a wing box. The wing 1220 includes an exterior panel assembly 1234 and an interior stiffener assembly 1236. The panel assembly 1234 includes a number of panels and may also be referred to as a wing skin. The stiffener assembly 1236 includes a number of spars, ribs, and the like. In these examples, the panel assembly 1234 is an example of the first component 106 and the stiffener assembly 1236 is an example of the second component 110. The stiffener assembly 1236 is coupled to the panel assembly 1234 and serves as a support structure for the wing 1220. It can be appreciated that, before the stiffener assembly 1236 is coupled to the panel assembly 1234, an initial shape of the panel assembly 1234 may exhibit deformation 162 due to the size and weight of the panel assembly 1234. After the stiffener assembly 1236 is coupled to the panel assembly 1234, the panel assembly 1234 may have a final shape that is different than the initial shape.

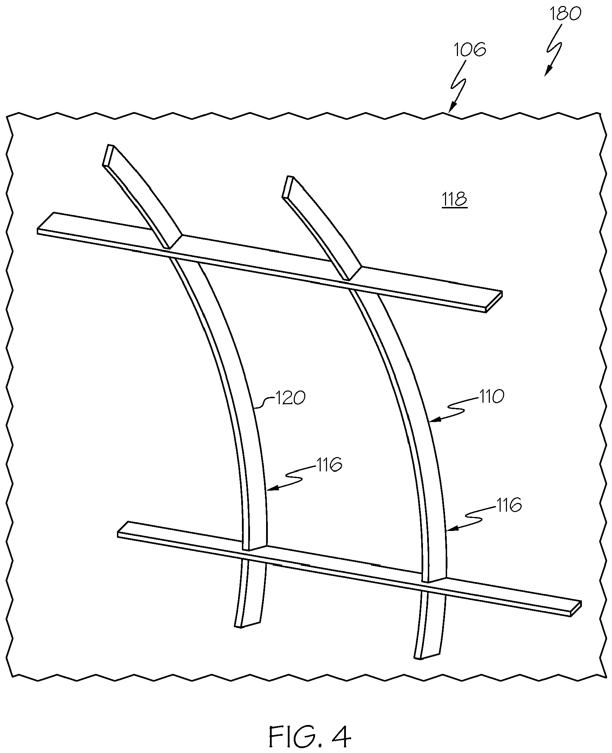

Referring to Fig. 4, which illustrates an example of a portion of the object 180 formed by the first component 106 coupled to the second component 110. When the first component 106 coupled to the second component 110 are coupled together, the first mating surface 118 and the second mating surface 120 are mated. After the first component 106 coupled to the second component 110 are coupled together and the first mating surface 118 and the second mating surface 120 are mated, a number of gaps 116 may be formed between the first mating surface 118 and the second mating surface 120.

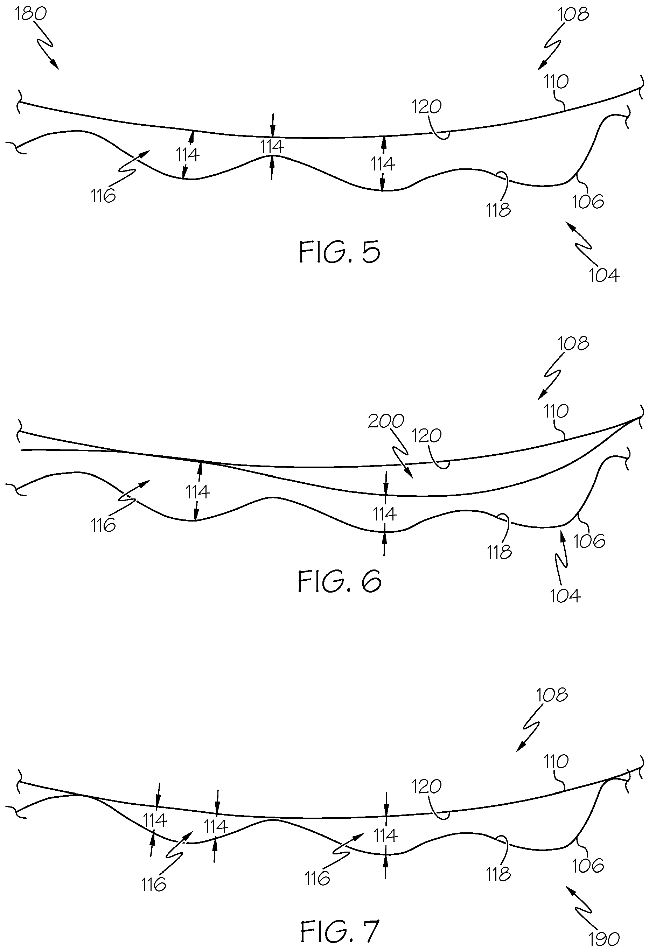

Referring to Fig. 5, which graphically illustrates an example of an analysis process of the first model 104 and the second model 108 to estimate the dimensions 114 of the gaps 116 between the first mating surface 118 and the second mating surface 120, such as used in a conventional predictive shimming process. In this illustrative example, the first model 104 represents the first component 106, such as at least a portion of the first mating surface 118. The second model 108 represents the second component 110, such as at least a portion of the second mating surface 120. The first model 104 represents the first component 106 and, thus, the first mating surface 118 as manufactured but before assembly of the object 180 (e.g., before the joining process 194). Similarly, the second model 108 represents the second component 110 and, thus, the second mating surface 120 as manufactured but before assembly of the object 180 (e.g., before the joining process 194).

Referring to Fig. 5, in one or more examples, the first model 104 represents the first component 106 and the first mating surface 118 in the initial shape 174 (e.g., the shape before the joining process 194), which, for example, includes the deformation 162 and the waviness 184 in the shape 146. As an example, the first component 106 is flexible and experiences some degree of deformation 162 (e.g., global variations in form 198) and the first mating surface 118 includes the waviness 184 (e.g., local variations in the surface profile), which are represented by the first model 104.

Referring to Fig. 5, in one or more examples, the second model 108 represents the second component 110 and the second mating surface 120 in the initial shape 174 (e.g., the shape before the joining process 194), which, for example, does not include the deformation 162 and the waviness 184 in the shape 146. As an example, the second component 110 is rigid and does not experience deformation 162 and the second mating surface 120 does not include waviness 184.

Referring to Fig. 5, the gaps 116 that will be formed between the first mating surface 118 and the second mating surface 120 after the joining process 194 are represented by the space between representations of the first mating surface 118 and the second mating surface 120 in the first model 104 and the second model 108, respectively. The dimensions 114 of the gaps 116 are estimated or calculated by the linear distances between the first mating surface 118 and the second mating surface 120 represented in the first model 104 and the second model 108. It can be appreciated that, in this illustrative example of the conventional predictive shimming process, the dimensions 114 of the gaps 116 predicted by the process may be larger than the dimensions 114 of the gaps 116 that will be actually present upon assembly of the object 180 (e.g., after the joining process 194) and, therefore, the dimension 196 of the fillers 144 fabricated to fill the gaps 116 would be too large (e.g., too thick).

Referring to Fig. 6, which graphically illustrate an example of the first model 104 and the second model 108. In one or more examples, a space 200 between the first mating surface 118 and the second mating surface 120 represented by the first model 104 and the second model 108, respectively, represents the area or distance between the first mating surface 118 and the second mating surface 120 associated with or formed by the deformation 162 (e.g., global variations in the form 198) in the shape 146 of the first component 106. Generally, the space 200 is closed or otherwise removed after or in response to assembly of the object 180 (e.g., after the joining process 194). Therefore, it is desirable to estimate the dimensions 114 of the gaps 116 without the deformation 162 in the shape 146 of the first component 106. The system 100 advantageously facilitates removal of the deformation 162 from the calculation of the dimensions 114 of the gaps 116 that will be formed between the first mating surface 118 and the second mating surface 120 after the first component 106 and the second component 110 are coupled together (e.g., after the joining process 194).

Referring to Fig.7, which graphically illustrate an example of an analysis process to estimate the dimensions 114 of the gaps 116 between the first mating surface 118 and the second mating surface 120, such as used in the predictive assembly process, or new proactive predictive shimming process, disclosed herein. In this illustrative example, the deformation 162 (e.g., global variations in the form 198) in the shape 146 of the first component 106 is removed from the analysis process such that only the waviness 184 in the shape 146 of the first mating surface 118 (e.g., local variations in the surface profile) are accounted for when determining the dimensions 114 of the gaps 116.

Referring to Fig. 7, as will be described in more detail herein, in one or more examples, the first model 104 is replaced by a modified nominal model 190 representing the first component 106. The modified nominal model 190 represents the first component 106, such as at least a portion of the first mating surface 118. The second model 108 represents the second component 110, such as at least a portion of the second mating surface 120. The modified nominal model 190 represents the first component 106 and, thus, the first mating surface 118 as manufactured but after assembly of the object 180 (e.g., after the joining process 194). Similarly, the second model 108 represents the second component 110 and, thus, the second mating surface 120 as manufactured but after assembly of the object 180 (e.g., after the joining process 194).

Referring to Fig. 7, in one or more examples, the modified nominal model 190 represents the first component 106 and the first mating surface 118 in the assembled shape 176 (e.g., the final shape after the joining process 194), which, for example, does not include the deformation 162 but does include the waviness 184 in the shape 146. As an example, the deformation 162 (e.g., global variations in form 198) in the shape 146 of the first component 106 represented by the space 200 (Fig. 6) has been removed (as will be pulled-out by the joining process 194) and the first mating surface 118 includes the waviness 184 (e.g., local variations in the surface profile), which is represented by the modified nominal model 190.

Referring to Fig. 7, in one or more examples, the second model 108 represents the second component 110 and the second mating surface 120 in the assembled shape 176 (e.g., the final shape after the joining process 194), which, for example, does not include the deformation 162 and the waviness 184 in the shape 146. As an example, the second component 110 is rigid and does not experience deformation 162 and the second mating surface 120 does not include waviness 184.

Referring to Fig. 7, the gaps 116 that will be formed between the first mating surface 118 and the second mating surface 120 are represented by the space between representations of the first mating surface 118 and the second mating surface 120 in the modified nominal model 190 and the second model 108, respectively. The dimensions 114 of the gaps 116 are estimated or calculated by the linear distances between the first mating surface 118 and the second mating surface 120 represented in the modified nominal model 190 and the second model 108. It can be appreciated that, in this illustrative example of the predictive assembly process, or new proactive predictive shimming process, the dimensions 114 of the gaps 116 predicted by the process (referred to herein as predicted dimensions 188 shown in Fig. 2) are substantially equal to the dimensions 114 of the gaps 116 that will be actually present upon assembly of the object 180 (e.g., after the joining process 194) and, therefore, the dimension 196 of the fillers 144 fabricated to fill the gaps 116 would be suitably sized.

Referring to Fig. 2, in one or more examples, the model analyzer 112 determines (e.g., is configured or adapted to determine) an overall deviation 122 in a normal direction 150 between the first model 104 and a nominal model 124 of the first component 106. In one or more examples, the model analyzer 112 performs (e.g., is configured or adapted to perform) a best fit alignment, also referred to as a best fit analysis 186, between the first model 104 and the nominal model 124 of the first component 106 to determine the overall deviation 122. In one or more examples, the model analyzer 112 determines (e.g., is configured or adapted to determine) overall dimensions 164 of the overall deviation 122 in the normal direction 150.

For the purpose of the present disclosure, the nominal model 124 refers to a computer-aided design (CAD) model of the first component 106 that represents a nominal or design geometry of the first component 106 and, thus, the first mating surface 118. It can be appreciated that the shape 146 of the first component 106 represented in the nominal model 124 does not include deformation 162 (global variations in form 198) or waviness 184 (local variations in surface profile).

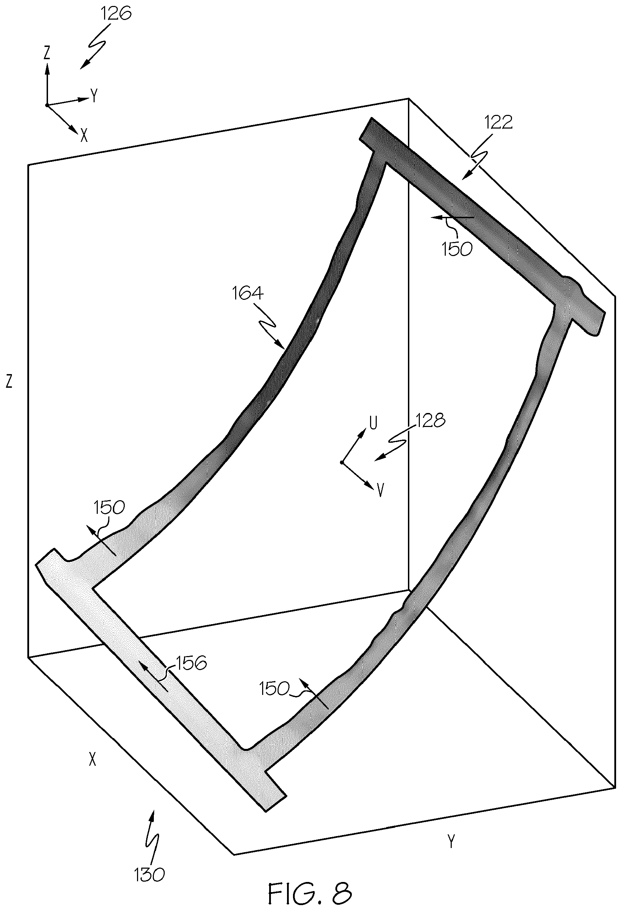

Referring to Fig. 8, which graphically illustrates an example of the overall deviation 122 in the normal direction 150 between the first model 104 and the nominal model 124 of the first component 106. Performing the best fit analysis 186, such as a least squares alignment) of the first mating surface 118 represented in the first model 104 and the first mating surface 118 represented in the nominal model 124 provides the overall deviation 122 in the normal direction 150 between the first model 104 (e.g., in the as-build condition) and the nominal model 124 (e.g., the design condition). The overall dimensions 164 are represented by or are calculated as values 130 (e.g., linear distance measurement values in the normal direction 150) relative to an XYZ-coordinate system 126.

Referring to Fig. 2, in one or more examples, the system 100, such as the computer 148, executing the instructions 170, includes a user interface (UI) 202. The graphical illustration of the overall deviation 122 and the overall dimensions 164 of the overall deviation 122 depicted in Fig. 8 is an example of a graphical representation displayed to a user by the UI 202.

Referring to Fig. 2, the overall deviation 122 includes both large-scale (e.g., gross or global) shape differences and small-scale surface variations. The large-scale shape variations represent the form 198 and are referred to herein as form deviations 132. The small-scale surface variations represent the waviness 184 and are referred to herein as waviness deviations 134. As disclosed herein, the system 100 advantageously enables the dimensions 114 of the gaps 116 that will be formed between the first mating surface 118 and the second mating surface 120 and, thus, the dimensions 196 of the fillers 144 to be fabricated to fill the gaps 116 to be determined based on only the small-scale variations (the waviness 184).

Referring to Fig. 2, in one or more examples, the model analyzer 112 maps (e.g., is configured or adapted to map) the overall deviation 122 from the XYZ-coordinate system 126 to a UVW-coordinate system 128 such that the values 130 for the overall dimensions 164 of the overall deviation 122 are represented along a W-axis 152 of the UVW-coordinate system 128. In one or more examples, coordinate mapping 192 includes any suitable conformal mapping or charting techniques.

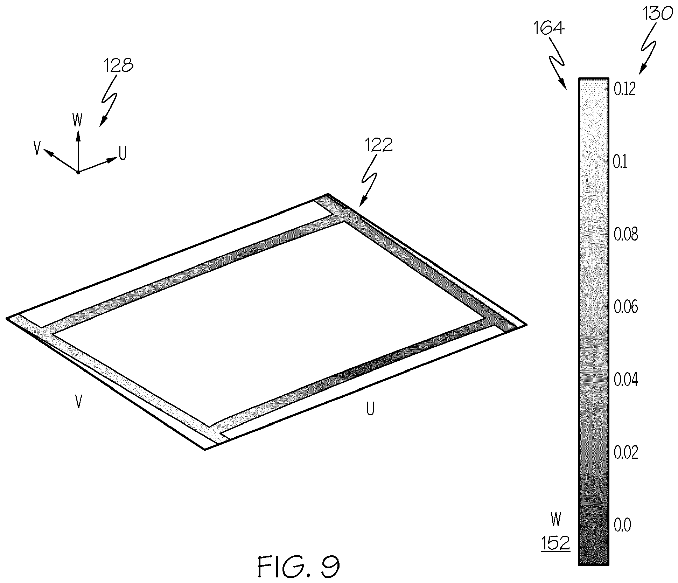

Referring to Fig. 9, which graphically illustrates an example of the overall deviation 122 as mapped from the XYZ-coordinate system 126 (Fig. 8) to the UVW-coordinate system 128. In one or more examples, the data representing the overall deviation 122 is changed (e.g., charted or mapped) from x, y, z-coordinate points to u, v, w-coordinate points. A two-dimensional (2D) coordinate system is used so that u, v-coordinates represent location on the first component 106 and w-coordinates represent the deviations from the nominal geometry. This operation effectively removes the "designed shape" from the first component 106 so that the W-axis 152 is only deviation from the design geometry. The graphical illustration of the overall deviation 122 and the overall dimensions 164 of the overall deviation 122 depicted in Fig. 9 is an example of a graphical representation displayed to a user by the UI 202.

Referring to Fig. 2, in one or more examples, the model analyzer 112 filters (e.g., is configured or adapted to filter) the values 130 for the overall dimensions 164 of the overall deviation 122 into the form deviation 132 and the waviness deviation 134. In one or more examples, the system 100, such as the computer 148, executing the instructions 170, includes a filter 154 that performs the filtering process. In one or more examples, the model analyzer 112 filters the values 130 using a low-pass filter 156. In one or more examples, the model analyzer 112 filters the values 130 using a robust Gaussian regression filter 158. In one or more examples, the filter 154, such as the low-pass filter 156 or the robust Gaussian regression filter 158, is run over the (u, v, w-point cloud to filter the data into form 198 and waviness 184. Because the designed curvature has effectively been removed, a first order regression function (e.g., planar regression) is selected and used for the local fitting.

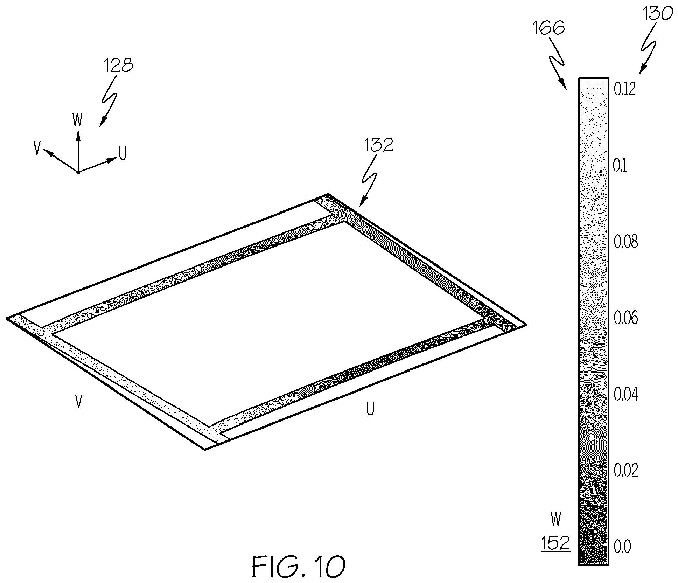

Referring to Fig. 10, which graphically illustrates an example of the form deviation 132 and the values 130 of the form dimensions 166 as mapped to the UVW-coordinate system 128 and as filtered from the overall dimensions 164 of the overall deviation 122. As depicted in the illustrative example, the values 130 of the form dimensions 166 of the form deviation 132 (Fig. 10) are approximately equal to the values 130 of the overall dimensions 164 of the overall deviation 122 (Fig. 9). This is because the global variations in the form 198 (form deviation 132) due to the deformation 162 represent the majority of the overall deviation 122 from the design geometry. The graphical illustration of the form deviation 132 and the form dimensions 166 of the form deviation 132 depicted in Fig. 10 is an example of a graphical representation displayed to a user by the UI 202.

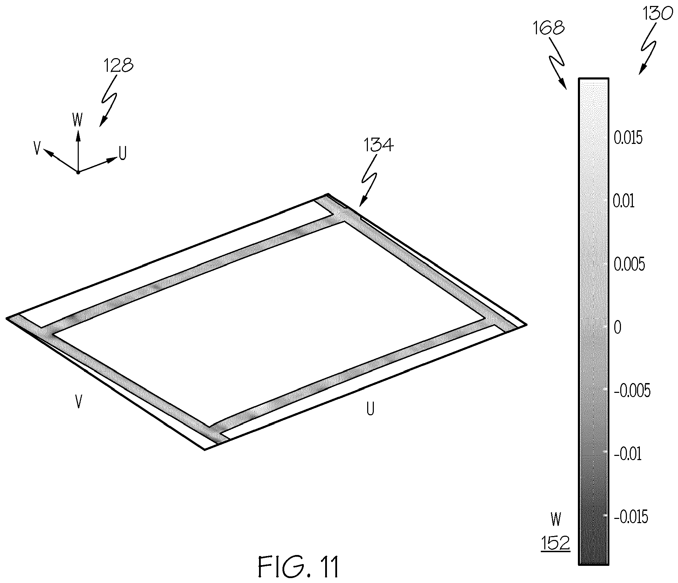

Referring to Fig. 11, which graphically illustrates an example of the waviness deviation 134 and the values 130 of the waviness dimensions 168 as mapped to the UVW-coordinate system 128 and as filtered from the overall dimensions 164 of the overall deviation 122. As depicted in the illustrative example, the values 130 of the waviness dimensions 168 of the waviness deviation 134 (Fig. 11) are orders of magnitude less than the values 130 of the overall dimensions 164 of the overall deviation 122 (Fig. 9). This is because the local variations in the waviness 184 (waviness deviation 134) due to small-scale variations in the surface profile of the first mating surface 118 represent a small portion of the overall deviation 122 from the design geometry. The graphical illustration of the form deviation 132 and the form dimensions 166 of the form deviation 132 depicted in Fig. 10 is an example of a graphical representation displayed to a user by the UI 202.

Referring to Fig. 2, in one or more examples, the model analyzer 112 modifies (e.g., is configured or adapted to modify) the nominal model 124 by the waviness deviation 134. The nominal model 124, as modified by the waviness deviation 134, represents the first mating surface 118 of the first component 106 after the first component 106 and the second component 110 are coupled together. The nominal model 124 as modified by the waviness deviation 134 is also referred to herein as the modified nominal model 190. In one or more examples, the model analyzer 112 maps (e.g., is configured or adapted to map) the waviness deviation 134 from the UVW-coordinate system 128 to the XYZ-coordinate system 126 such that values 130 for waviness dimensions 168 of the waviness deviation 134 are represented as distances 160 relative to the nominal model 124.

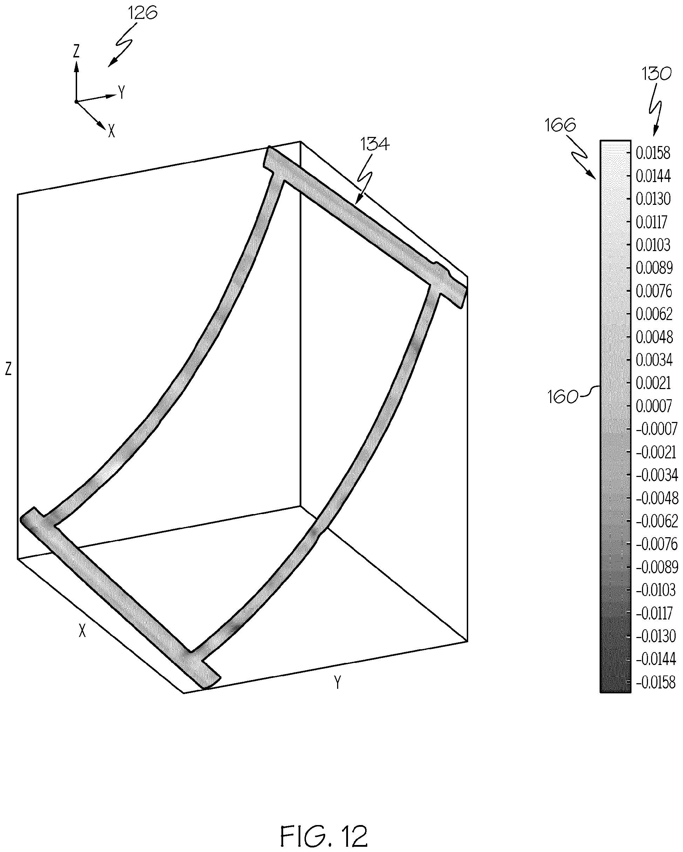

Referring to Fig. 12, which graphically illustrates an example of the waviness deviation 134 as mapped from the UVW-coordinate system 128 (Fig. 11) back to the XYZ-coordinate system 126 and the values 130 of the waviness dimensions 168 represented as distances 160 in the normal direction 150 relative to the nominal model 124. In one or more examples, the data representing the waviness deviation 134 is changed (e.g., charted or mapped) from u, v, w-coordinate points back to x, y, z-coordinate points. The calculated waviness 184 in the w-coordinate is used as the distance 160 to add to the nominal model 124 or to subtract from the nominal model 124 to get the filler, or shim, profile, estimate the predicted dimensions 188 of the fillers 144, or otherwise estimate the dimensions 114 of the gaps 116 that will be formed between the first mating surface 118 and the second mating surface 120 after the first component 106 and the second component 110 are coupled together (e.g., after the joining process 194). The graphical illustration of the waviness deviation 134 and the waviness dimensions 168 as the distances 160 depicted in Fig. 12 is an example of a graphical representation displayed to a user by the UI 202.

Referring to Fig. 2, in one or more examples, the system 100 includes a measurement system 136. The measurement system 136 generates first data 138 representing at least a portion of the first mating surface 118 of the first component 106. The measurement system 136 generates second data 140 representing at least a portion of the second mating surface 120 of the second component 110. The first data 138 and the second data 140 are generated before the first component 106 and the second component 110 are coupled together and the first mating surface 118 and the second mating surface 120 are mated.

Referring to Fig. 2, in one or more examples, the measurement system 136 includes or takes the form of a scanning device that is used to scan the first component 106, such as at least a portion of the first mating surface 118, and to generate the first data 138. The measurement system 136 includes or takes the form of a scanning device that is used to scan the second component 110, such as at least a portion of the second mating surface 120, and to generate the second data 140. The scanning device may take the form of, for example, without limitation, a laser system, an optical measurement device, or some other type of system. The laser system may be, for example, a laser radar scanner. The optical measurement device may be, for example, a three-dimensional optical measurement device. In another illustrative example, measurement system 136 takes the form of a photogrammetry system.

In one or more examples, the first component 106 and the second component 110 may be manufactured in different locations and/or measured (e.g., scanned) in different locations. As such, in one or more examples, the measurement system 136 includes more than one scanning device, in which each one of the scanning devices is co-located with or is dedicated to the manufacturing or measuring environment associated with a respective one of the first component 106 and the second component 110.

Referring to Figs. 1 and 2, in one or more examples, the first data 138 includes data or 3D shape information about the shape 146, for example, the initial shape 174, of the first component 106 and, thus, the first mating surface 118. In one or more examples, the second data 140 includes data or 3D shape information about the shape 146, for example, the initial shape 174, of the second component 110 and, thus, the second mating surface 120.

Referring to Fig. 2, in one or more examples, the first data 138 and the second data 140 take the form of three-dimensional point clouds. As an example, the first data 138 takes the form of a first three-dimensional point cloud that has sufficient density to capture the shape 146 of the first component 106 and, thus, the first mating surface 118 with a desired level of accuracy. Similarly, the second data 140 takes the form of a second three-dimensional point cloud that has sufficient density to capture the shape 146 of the second component 110 and, thus, the second mating surface 120 with a desired level of accuracy.

Referring to Fig. 2, in one or more examples, the model generator 102 generates (e.g., is configured or adapter to generate) a filler model 142 to fill one or more of the gaps 116 between the first mating surface 118 and the second mating surface 120 after the first component 106 and the second component 110 are coupled together. The filler 144 is fabricated based on the filler model 142.

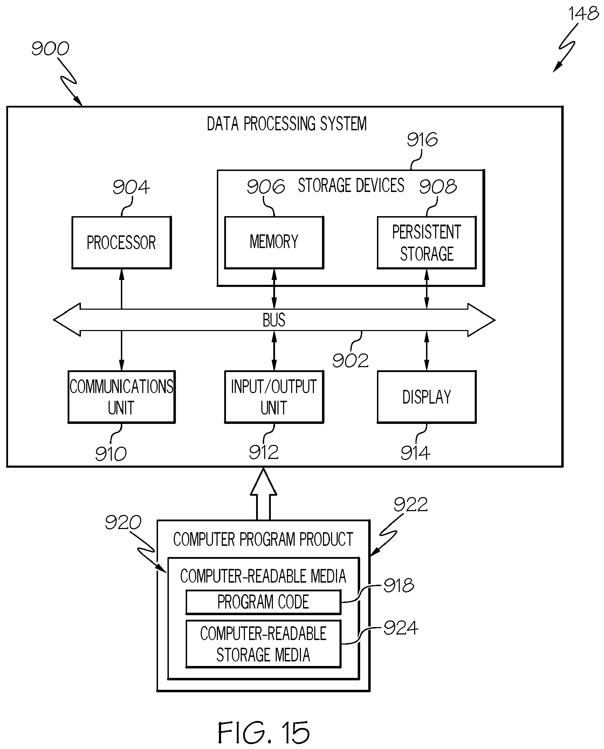

Referring to Figs. 2 and 15, in one or more examples, the model generator 102 and the model analyzer 112 take the form of program code 918 that is executed by a data processing system 900.

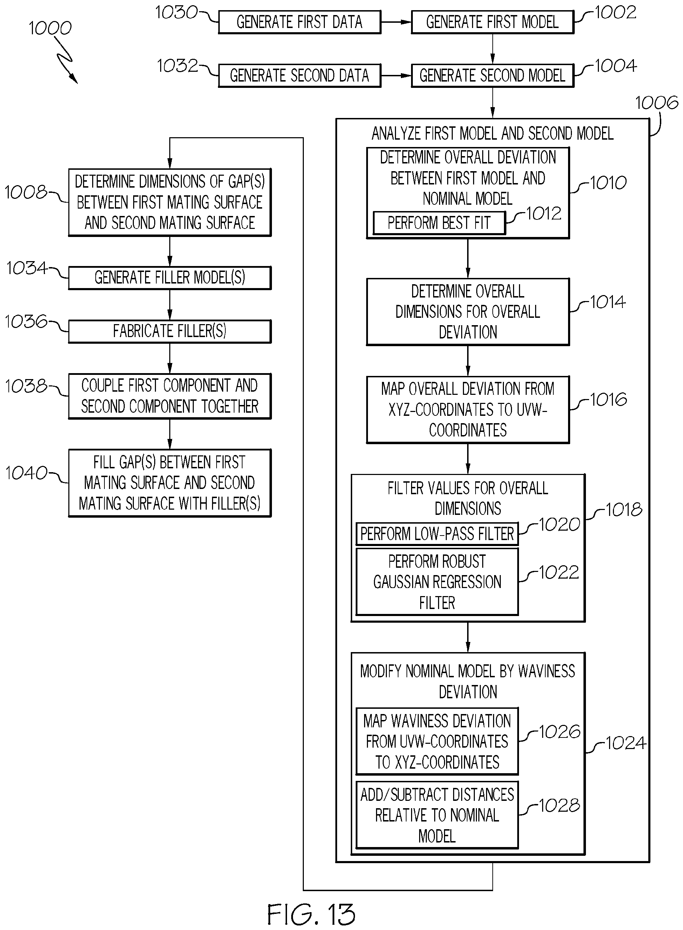

Referring generally to Figs. 1-12 and particularly to Fig. 13, by way of examples, the present disclosure is also directed to a method 1000 for predictive assembly, or proactive shimming. More particularly, the method 1000 includes a process for predicting the dimensions 114 of the gaps 116, a process for predicting the dimensions 196 of the fillers 144 or otherwise sizing the fillers 144, and a process for fabricating the filler 144. In one or more examples, at least a portion of the operations of the method 1000 is performed or implemented using the system 100.

Referring to Fig. 13, in one or more examples, the method 1000 includes a step of (block 1002) generating the first model 104 of the first component 106. The method 1000 includes a step of (block 1004) generating the second model 108 of the second component 110. The step of (block 1002) generating the first model 104 and the step of (block 1004) generating the second model 108 are performed before the first component 106 and the second component 110 are coupled together. The method 1000 also includes a step of (block 1006) analyzing the first model 104 and the second model 108 to determine the dimension 114 of the gap 116 between the first mating surface 118 of the first component 106 and the second mating surface 120 of the second component 110 after the first component 106 and the second component 110 are coupled together. As an example, the method 1000 includes a step of (block 1008) determining (e.g., calculating) the dimension 114 of the gap 116 between the first mating surface 118 of the first component 106 and the second mating surface 120 of the second component 110 based on the analysis performed on the first model 104 and the second model 108.

Referring to Fig. 13, in one or more examples, the method 1000, such as the step of (block 1006) analyzing, includes a step of (block 1010) determining (e.g., calculating) the overall deviation 122 in the normal direction 150 between the first model 104 and the nominal model 124 of the first component 106. In one or more examples, the method 1000, such as the step of (block 1010) determining, includes a step of (block 1012) performing a best fit alignment between the first model 104 and the nominal model 124 of the first component 106 to determine the overall deviation 122. In one or more examples, the method 1000, such as the step of (block 1010) analyzing, includes a step of (block 1014) determining (e.g., calculating) overall dimensions 164 of the overall deviation 122 in the normal direction 150.

Referring to Fig. 13, in one or more examples, the method 1000, such as the step of (block 1010) analyzing, includes a step of (block 1016) mapping the overall deviation 122 from the XYZ-coordinate system 126 to the UVW-coordinate system 128 such that values 130 for the overall dimensions 164 of the overall deviation 122 are represented along the W-axis 152.

Referring to Fig. 13, in one or more examples, the method 1000, such as the step of (block 1010) analyzing, includes a step of (block 1018) filtering the values 130 for the overall dimensions 164 of the overall deviation 122 into the form deviation 132 and the waviness deviation 134. In one or more examples, according to the method 1000, the step of (block 1018) filtering is performed using the low-pass filter 156 or includes a step of (block 1020) performing or executing the low-pass filter 156. In one or more examples, according to the method 1000, the step of (block 1018) filtering is performed using the robust Gaussian regression filter 158 or includes a step of (block 1022) performing or executing the robust Gaussian regression filter 158.

Referring to Fig. 13, in one or more examples, the method 1000, such as the step of (block 1010) analyzing, includes a step of (block 1024) modifying the nominal model 124 by the waviness deviation 134 such that the nominal model 124, as modified by the waviness deviation 134, represents the first mating surface 118 of the first component 106 after the first component 106 and the second component 110 are coupled together. In one or more examples, the method 1000, such as the step of (block 1024) modifying, includes a step of (block 1026) mapping the waviness deviation 134 from the UVW-coordinate system 128 to the XYZ-coordinate system 126 such that values 130 for waviness dimensions 168 of the waviness deviation 134 are represented as distances 160 relative to the nominal model 124. In one or more examples, the step of (block 1024) modifying includes a step of (block 1028) adding the distances 160 to and/or subtracting the distances 160 from the nominal model 124 such that the modified nominal model 190 represents the first component 106 having the assembled shape 176, thereby providing the dimensions 114 of the gaps 116 and, thus, the dimensions 114 (e.g., profile, shape, and thickness) of the filler 144.

Referring to Fig. 13, in one or more examples, the method 1000 includes a step of (block 1030) generating first data 138 representing at least a portion of the first mating surface 118 of the first component 106. The step of (block 1030) generating the first data 138 is performed before the first component 106 and the second component 110 are coupled together. The first model 104 is generated using the first data 138. In one or more examples, the method 1000 includes a step of (block 1032) generating second data 140 representing at least a portion of the second mating surface 120 of the second component 110. The step of (block 1032) generating the second data 140 is performed before the first component 106 and the second component 110 are coupled together. The second model 108 is generated using the second data 140.

Referring to Fig. 12, in one or more examples, the method 1000 includes a step of (block 1034) generating the filler model 142 to fill the gap 116 between the first mating surface 118 and the second mating surface 120 after the first component 106 and the second component 110 are coupled together. In one or more examples, the method 1000 includes a step of (block 1036) fabricating the filler 144 based on the filler model 142.

Referring to Fig. 12, in one or more examples, the method 1000 includes a step of (block 1038) coupling the first component 106 and the second component 110 together. In one or more examples, the step of (block 1038) coupling is performed using the joining process 194 such that the first mating surface 118 and the second mating surface 120 are mated. In one or more examples, a number of the gaps 116 are formed between the first mating surface 118 and the second mating surface 120. In one or more examples, the method 1000 includes a step of (block 1040) filling the gaps 116 with the fillers 144. In one or more examples, because the fillers 144 have the dimensions 196 that are suitable for substantially filling the gaps 116 as predicted according to the method 1000, the step of (block 1038) and the step of (1040) filling are performed concurrently. As an example, the fillers 144 are coupled the first mating surface 118 of the first component 106 and then the second component 110 is coupled to the first component 106 such that the first mating surface 118 and the second mating surface 120 are mated and any gaps 116 are substantially filled by the fillers 144. In one or more examples, according to the method 1000, the three-dimensional shape 146 of the first component 106 changes after the first component 106 and the second component 110 are coupled together.

Referring to Figs. 2 and 13, in one or more examples, the method 1000 is implemented using the computer 148. For example, the method 1000 is a computer-implemented method. In one or more examples, the system 100 is a computer-implemented system that is configured or adapted to implement the method 1000.

Referring to Fig. 1, also disclosed is the filler 144. In one or more examples, the filler 144 is fabricated according to the method 1000. In one or more examples, the filler 144 is fabricated using the system 100. The filler 144 takes the form of a solid member that is made of any suitable material, such as metal, metal alloy, plastic, composite, and the like. Any number of the fillers 144 may be manufactured based on the predicted dimensions 188 (e.g., three-dimensional shape information) prior to the joining process 194. The fillers 144 can be manufactured using any number of manufacturing processes including, but not limited to, at least one of machining, cutting, bending, hammering, casting, three-dimensional printing, aerosol jet deposition, inkjet deposition, or some other type of forming process.

Referring to Fig. 3, also disclosed is a portion of the aircraft 1200. The portion of the aircraft 1200 includes or otherwise utilizes a number of the fillers 144 that is fabricated according to the method 1000 or using the system 100.

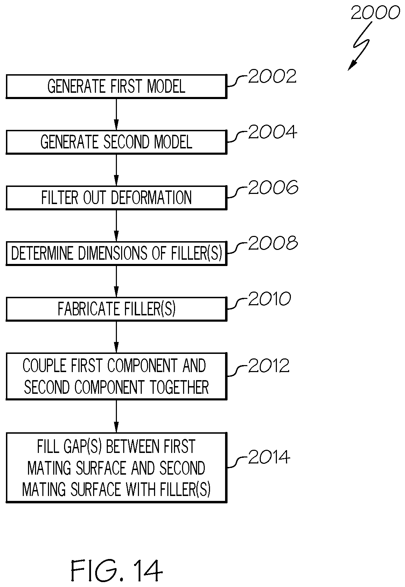

Referring generally to Figs. 1-12 and particularly to Fig. 14, by way of examples, the present disclosure is further directed to a method 2000 for sizing the filler 144 for fabrication. In one or more examples, at least a portion of the operations of the method 2000 is performed or implemented using the system 100.

Referring to Fig. 14, in one or more examples, the method 2000 includes a step of (block 2002) generating the first model 104 of the first component 106. The method 2000 includes a step of (block 2004) generating the second model 108 of the second component 110. The step of (block 2002) generating the first model 104 and the step of (block 2004) generating the second model 108 are performed before the first component 106 and the second component 110 are coupled together. The method 2000 includes a step of (block 2006) filtering out deformation 162 of at least one of the first component 106 and the second component 110 before the first component 106 and the second component 110 are coupled together. The method 2000 includes a step of (block 2008) determining the dimension 114 of the filler 144 (e.g., predicted dimensions 188) that fits between the first mating surface 118 of the first component 106 and the second mating surface 120 of the second component 110 after the first component 106 and the second component 110 are coupled together.

Referring to Figs. 13 and 14, in one or more examples, step of (block 2006) filtering out deformation 162 of at least one of the first component 106 and the second component 110 before the first component 106 and the second component 110 are coupled together is an example of the step of block (1006) analyzing the first model 104 and the second model 108 of the method 1000. In one or more examples, step of (block 2008) determining the dimension 114 of the filler 144 is an example of the step of block (1008) determining the dimensions 114 of the gaps 116 and the step of (block 1034) generating the filler models 142 of the method 1000.

Referring to Fig. 14, in one or more examples, the method 1000 includes a step of (block 2010) fabricating a number of the fillers 144 based on the dimensions 196 of the fillers 144 that were predicted (e.g., the predicted dimensions 188). In one or more examples, the method 2000 includes a step of (block 2012) coupling the first component 106 and the second component 110 together. In one or more examples, the step of (block 2012) coupling is performed using the joining process 194 such that the first mating surface 118 and the second mating surface 120 are mated. In one or more examples, a number of the gaps 116 are formed between the first mating surface 118 and the second mating surface 120. In one or more examples, the method 2000 includes a step of (block 2014) filling the gaps 116 with the fillers 144. In one or more examples, because the fillers 144 have the dimensions 196 that are suitable for substantially filling the gaps 116 as predicted according to the method 1000, the step of (block 2012) and the step of (2014) filling are performed concurrently. As an example, the fillers 144 are coupled the first mating surface 118 of the first component 106 and then the second component 110 is coupled to the first component 106 such that the first mating surface 118 and the second mating surface 120 are mated and any gaps 116 are substantially filled by the fillers 144.

Referring to Figs. 2 and 14, in one or more examples, the method 2000 is implemented using the computer 148. For example, the method 2000 is a computer-implemented method. In one or more examples, the system 100 is a computer-implemented system that is configured or adapted to implement the method 2000.

Referring to Fig. 15, by way of examples, the present disclosure is also directed to the computer program product 922. The computer program product 922 includes a non-transitory computer-readable medium 920 including program code 918 that, when executed by one or more processors 904, causes the one or more processors 904 to perform operations.

Referring to Figs. 13-15, in one or more examples, the operations include generating the first model 104 of the first component 106 from the first data 138 before the first component 106 is coupled to the second component 110. The operations include generating the second model 108 of the second component 110 from the second data 140 before the second component 110 is coupled to the first component 106.

In one or more examples, the operations include filtering out the deformation 162. The operations include analyzing the first model 104 and the second model 108 to determine dimensions 114 of the gap 116 between the first mating surface 118 of the first component 106 and the second mating surface 120 of the second component 110 after the first component 106 and the second component 110 are coupled together. In one or more examples, the operations include determining the dimensions 114 of the gaps 116. In one or more examples, the operations include determining the dimensions 196 of the fillers 144.

In one or more examples, the operations include determining the overall deviation 122 in the normal direction 150 between the first model 104 and the nominal model 124 of the first component 106. In one or more examples, the operations include performing the best fit alignment between the first model 104 and the nominal model 124 of the first component 106 to determine the overall deviation 122. In one or more examples, the operations include determining overall dimensions 164 of the overall deviation 122 in the normal direction 150.

In one or more examples, the operations include mapping the overall deviation 122 from the XYZ-coordinate system 126 to the UVW-coordinate system 128 such that values 130 for the overall dimensions 164 of the overall deviation 122 are represented along the W-axis 152.

In one or more examples, the operations include filtering the values 130 for the overall dimensions 164 of the overall deviation 122 into the form deviation 132 and the waviness deviation 134. In one or more examples, the filtering is performed using the low-pass filter 156. In one or more examples, the filtering is performed using the robust Gaussian regression filter 158.

In one or more examples, the operations include modifying the nominal model 124 by the waviness deviation 134 such that the nominal model 124 as modified by the waviness deviation 134 represents the first mating surface 118 of the first component 106 after the first component 106 and the second component 110 are coupled together.

In one or more examples, the operations include mapping the waviness deviation 134 from the UVW-coordinate system 128 to the XYZ-coordinate system 126 such that values 130 for the waviness dimensions 168 of the waviness deviation 134 are represented as distances 160 relative to the nominal model 124.

In one or more examples, the operations include generating the filler model 142 to fill the gap 116 between the first mating surface 118 and the second mating surface 120 after the first component 106 and the second component 110 are coupled together. The filler 144 is fabricated based on the filler model 142.

Referring to Fig. 2, in one or more examples, the system 100 may be implemented using software, hardware, firmware, or a combination thereof. When software is used, the operations performed by the system 100 may be implemented using, for example, without limitation, program code configured to run on a processor unit. When firmware is used, the operations performed by the system 100 may be implemented using, for example, without limitation, program code and data and stored in persistent memory to run on a processor unit.

When hardware is employed, the hardware may include one or more circuits that operate to perform the operations performed by the system 100. Depending on the implementation, the hardware may take the form of a circuit system, an integrated circuit, an application specific integrated circuit (ASIC), a programmable logic device, or some other suitable type of hardware device configured to perform any number of operations.

A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In some illustrative examples, the operations and processes performed by the system 100 may be performed using organic components integrated with inorganic components. In some cases, the operations and processes may be performed by entirely organic components, excluding a human being. For example, circuits in organic semiconductors may be used to perform these operations and processes.

Referring to Fig. 15, in one or more examples, the computer 148 (Fig. 2) includes or takes the form of a data processing system 900. In one or more examples, the data processing system 900 includes a communications framework 902, which provides communications between at least one processor 904, one or more storage devices 916, such as memory 906 and/or persistent storage 908, a communications unit 910, an input/output unit 912 (I/O unit), and a display 914. In this example, the communications framework 902 takes the form of a bus system.

The processor 904 serves to execute the instructions 170 (Fig. 2) for software that can be loaded into the memory 906. In one or more examples, the processor 904 is a number of processor units, a multi-processor core, or some other type of processor, depending on the particular implementation.

The memory 906 and the persistent storage 908 are examples of the storage devices 916. A storage device is any piece of hardware that is capable of storing information, such as, for example, without limitation, at least one of data, program code in functional form, or other suitable information either on a temporary basis, a permanent basis, or both on a temporary basis and a permanent basis. The storage devices 916 may also be referred to as computer readable storage devices in one or more examples. The memory 906 is, for example, a random-access memory or any other suitable volatile or non-volatile storage device. The persistent storage 908 can take various forms, depending on the particular implementation.

For example, the persistent storage 908 contains one or more components or devices. For example, the persistent storage 908 is a hard drive, a solid-state hard drive, a flash memory, a rewritable optical disk, a rewritable magnetic tape, or some combination of the above. The media used by the persistent storage 908 also can be removable. For example, a removable hard drive can be used for the persistent storage 908.

The communications unit 910 provides for communications with other systems or devices, such as the measurement system 136 or other computer systems. In one or more examples, the communications unit 910 is a network interface card.

Input/output unit 912 allows for input and output of data with other devices that can be connected to the data processing system 900. As an example, the input/output unit 912 provides a connection for user input through at least one of a keyboard, a mouse, or some other suitable input device. Further, the input/output unit 912 can send output to a printer. The display 914 provides a mechanism to display information to a user. For example, the user interface 202 is displayed to a user by the display 914.

Instructions (e.g., instructions 170) for at least one of the operating system, applications, or programs can be located in the storage devices 916, which are in communication with the processor 904 through the communications framework 902. The processes of the various examples and operations described herein can be performed by the processor 904 using computer-implemented instructions, which can be located in a memory, such as the memory 906.

The instructions 170 are referred to as program code, computer usable program code, or computer readable program code that can be read and executed by a processor of the processor 904. The program code in the different examples can be embodied on different physical or computer readable storage media, such as the memory 906 or the persistent storage 908.

In one or more examples, the program code 918 is located in a functional form on computer readable media 920 that is selectively removable and can be loaded onto or transferred to the data processing system 900 for execution by the processor 904. In one or more examples, the program code 918 and computer readable media 920 form the computer program product 922. In one or more examples, the computer readable media 920 is computer readable storage media 924.

In one or more examples, the computer readable storage media 924 is a physical or tangible storage device used to store the program code 918 rather than a medium that propagates or transmits the program code 918.

Alternatively, the program code 918 can be transferred to the data processing system 900 using a computer readable signal media. The computer readable signal media can be, for example, a propagated data signal containing the program code 918. For example, the computer readable signal media can be at least one of an electromagnetic signal, an optical signal, or any other suitable type of signal. These signals can be transmitted over at least one of communications links, such as wireless communications links, optical fiber cable, coaxial cable, a wire, or any other suitable type of communications link.

The different components illustrated for data processing system 900 are not meant to provide architectural limitations to the manner in which different examples can be implemented. The different examples can be implemented in a data processing system including components in addition to or in place of those illustrated for the data processing system 900. Other components shown in Fig. 21 can be varied from the examples shown. The different examples can be implemented using any hardware device or system capable of running the program code 918.

Additionally, various components of the computer 148 and/or the data processing system 900 may be described as modules. For the purpose of the present disclosure, the term "module" includes hardware, software or a combination of hardware and software. As an example, a module can include one or more circuits configured to perform or execute the described functions or operations of the executed processes described herein (e.g., the method 1000 and/or the method 2000). As another example, a module includes a processor, a storage device (e.g., a memory), and computer-readable storage medium having instructions that, when executed by the processor causes the processor to perform or execute the described functions and operations. In one or more examples, a module takes the form of the program code 918 and the computer readable media 920 together forming the computer program product 922. In one or more examples, the model generator 102 and the model analyzer 112 are implemented as modules.

The system 100, method 1000, method 2000, and computer program product 922 generate models for the fillers, such as shims or other filler members, that will be needed to fill the gaps between mating surfaces of the components being joined. In one or more examples, the system 100 includes an automated manufacturing system capable of manufacturing the fillers based on the models of the fillers, such that the fillers are manufactured as specified by the models with a desired level of accuracy. By more accurately predicting the shapes of fillers, fillers may be manufactured off-site before installation and assembly of the components during manufacture of an object. Further, the amount of rework that may need to be performed during installation of the fillers may be reduced, and the need for manufacturing new (e.g., secondary) fillers once the shimming process has already begun may be reduced.

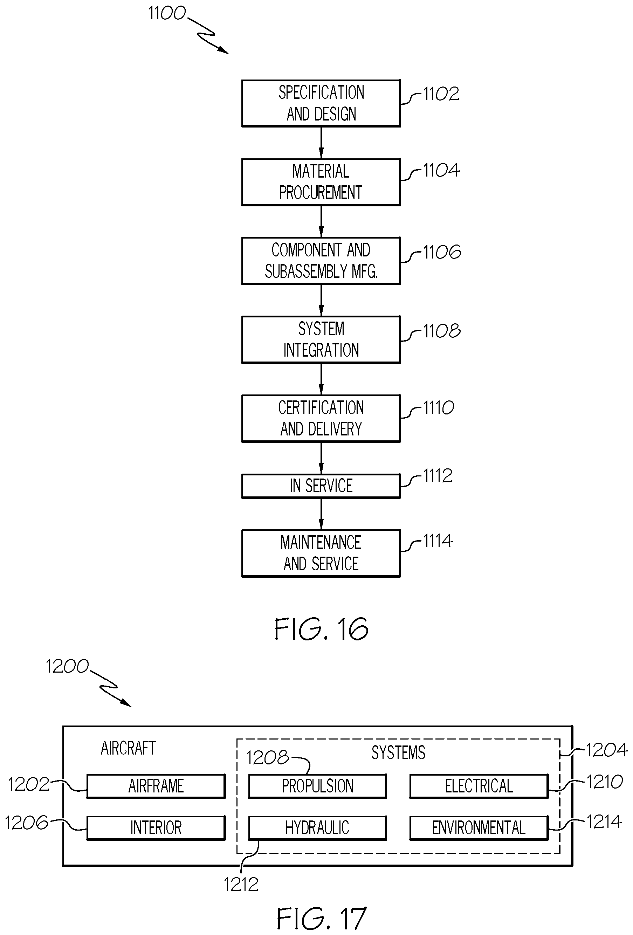

Referring now to Figs. 16 and 17, examples of the system 100, the method 1000, the method 2000, and/or the computer program product 922 described herein, may be related to, or used in the context of, an aircraft manufacturing and service method 1100, as shown in the flow diagram of Fig. 16 and the aircraft 1200, as schematically illustrated in Figs. 3 and 17. For example, the aircraft 1200 and/or the aircraft production and service method 1100 may include the object 180 (Fig. 1), such as the fuselage 1218, the wings 1220, and the like, made using fillers 144 that fill gaps 116 between mated surface, in which the fillers 144 are shaped and fabricated using the system 100 and/or according to the method 1000 or the method 2000.

Referring to Fig. 3 and 17, which illustrates examples of the aircraft 1200. The aircraft 1200 includes an airframe 1202 having an interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems 1216 coupled to an airframe 1202 of the aircraft 1200, such as for example, flaps, spoilers, ailerons, slats, rudders, elevators, and trim tabs. In yet other examples, the onboard systems 1204 also includes one or more other systems, such as, but not limited to, communications systems, avionics systems, software distribution systems, network communications systems, passenger information/entertainment systems, guidance systems, radar systems, weapons systems, and the like. The aircraft 1200 may include various other structures that utilize the fillers 144.

Referring to Fig. 16, during pre-production of the aircraft 1200, the method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the method 1100 illustrated in Fig. 16 may be performed or carried out by a system integrator, a third party, and/or an operator (e.g., a customer). For the purposes of this description, a system integrator may include, without limitation, any number of spacecraft manufacturers and major-system subcontractors; a third party may include, without limitation, any number of vendors, subcontractors, and suppliers; and an operator may be an airline, leasing company, military entity, service organization, and so on.

Examples of the system 100, the method 1000, the method 2000, and the computer program product 922 shown and described herein, may be employed during any one or more of the stages of the manufacturing and service method 1100 shown in the flow diagram illustrated by Fig. 16. In an example, fillers 144 designed, sized, and/or fabricated using the system 100 and/or according to the method 1000 or the method 2000 may form a portion of component and subassembly manufacturing (block 1106) and/or system integration (block 1108). Further, fillers 144 designed, sized, and/or fabricated using the system 100 and/or according to the method 1000 or the method 2000 may be implemented in a manner similar to components or subassemblies prepared while the aircraft 1200 is in service (block 1112). Also, fillers 144 designed, sized, and/or fabricated using the system 100 and/or according to the method 1000 or the method 2000 may be utilized during system integration (block 1108) and certification and delivery (block 1110). Similarly, fillers 144 designed, sized, and/or fabricated using the system 100 and/or according to the method 1000 or the method 2000 may be utilized, for example and without limitation, while the aircraft 1200 is in service (block 1112) and during maintenance and service (block 1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item Band seven of item C; and other suitable combinations. As used herein, the term "and/or" and the "j" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represent a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-12, 15 and 17, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-12, 15 and 17, referred to above, need be included in every example and not all elements, features, and/or components described herein are necessarily depicted in each illustrative example. Accordingly, some of the elements, features, and/or components described and illustrated in Figs. 1-12, 15 and 17 may be combined in various ways without the need to include other features described and illustrated in Figs. 1-12, 15 and 17, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1-12, 15 and 17, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-12, 15 and 17, and such elements, features, and/or components may not be discussed in detail herein with reference to each of Figs. 1-12, 15 and 17. Similarly, all elements, features, and/or components may not be labeled in each of Figs. 1-12, 15 and 17, but reference numerals associated therewith may be utilized herein for consistency.

In Figs. 13, 14 and 16, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 13, 14 and 16 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100, the method 1000, the method 2000, and the computer program product 922 have been shown and described, modifications may occur to those skilled in the art upon reading the specification. The present application includes such modifications and is limited only by the scope of the claims.

Although the claimed invention is only defined by the claims, the below embodiments, worded as Examples. are present for aiding in understanding the background and advantages of the claimed invention. It is to be noted that the features defined in the listed Examples may be combined with each other arbitrarily.
Example 1. A system comprises:
   a model generator that generates a first model of a first component and a second model of a second component before the first component and the second component are coupled together; and
   a model analyzer that analyzes the first model and the second model to determine a dimension of a gap between a first mating surface of the first component and a second mating surface of the second component after the first component and the second component are coupled together.
Example 2. The system of Example 1, wherein the model analyzer determines an overall deviation in a normal direction between the first model and a nominal model of the first component.
Example 3. The system of Example 1 or 2, wherein the model analyzer performs a best fit alignment between the first model and the nominal model of the first component to determine the overall deviation.
Example 4. The system of any of the preceding Examples, wherein the model analyzer determines an overall dimension of the overall deviation in the normal direction.
Example 5. The system of any of the preceding Examples, wherein the model analyzer maps the overall deviation from an XYZ-coordinate system to a UVW-coordinate system such that values for the dimensions of the overall deviation are represented along a W-axis.
Example 6. The system of any of the preceding Examples, wherein the model analyzer filters the values for the dimensions of the overall deviation into a form deviation and a waviness deviation.
Example 7. The system of any of the preceding Examples, wherein the model analyzer filters the values using a low-pass filter.
Example 8. The system of any of the preceding Examples, wherein the model analyzer filters the values using a robust gaussian regression filter.
Example 9. The system of any of the preceding Examples, wherein:
   the model analyzer modifies the nominal model by the waviness deviation; and
   the nominal model as modified by the waviness deviation represents the first mating surface of the first component after the first component and the second component are coupled together.
Example 10. The system of any of the preceding Examples, wherein the model analyzer maps the waviness deviation from the UVW-coordinate system to the XYZ-coordinate system such that values for waviness dimensions of the waviness deviation are represented as distances relative to the nominal model.
Example 11. The system of any of the preceding Examples, further comprising a measurement system to generate first data representing at least a portion of the first mating surface of the first component and second data representing at least a portion of the second mating surface of the second component before the first mating surface and the second mating surface are mated.
Example 12. The system of any of the preceding Examples, wherein:
   the model generator generates a filler model to fill the gap between the first mating surface and the second mating surface after the first component and the second component are coupled together; and
   a filler is fabricated based on the filler model.
Example 13. The system of any of the preceding Examples, wherein the model generator and the model analyzer take the form of program code that is executed by a data processing system.
Example 14. A method for fabricating a filler using the system of any of the preceding Examples.
Example 15. A method for fabricating a filler, the method comprising:
   generating a first model of a first component and a second model of a second component before the first component and the second component are coupled together; and
   analyzing the first model and the second model to determine a dimension of a gap between a first mating surface of the first component and a second mating surface of the second component after the first component and the second component are coupled together.
Example 16. The method of Example 15, further comprising determining an overall deviation in a normal direction between the first model and a nominal model of the first component.
Example 17. The method of Example 15 or 16, further comprising performing a best fit alignment between the first model and the nominal model of the first component to determine the overall deviation.
Example 18. The method of Example 15, 16 or 17, further comprising determining overall dimensions of the overall deviation in the normal direction.
Example 19. The method of Example 18, further comprising mapping the overall deviation from an XYZ-coordinate system to a UVW-coordinate system such that values for the dimensions of the overall deviation are represented along a W-axis.
Example 20. The method of any of Examples 15 to 19, further comprising filtering the values for the dimensions of the overall deviation into a form deviation and a waviness deviation.
Example 21. The method of any of Examples 15 to 20, wherein the filtering is performed using a low-pass filter.
Example 22. The method of any of Examples 15 to 21, wherein the filtering is performed using a robust gaussian regression filter.
Example 23. The method of any of Examples 15 to 22, further comprising modifying the nominal model by the waviness deviation such that the nominal model as modified by the waviness deviation represents the first mating surface of the first component after the first component and the second component are coupled together.
Example 24. The method of any of Examples 15 to 23, further comprising mapping the waviness deviation from the UVW-coordinate system to the XYZ-coordinate system such that values for waviness dimensions of the waviness deviation are represented as distances relative to the nominal model.
Example 25. The method of any of Examples 15 to 24, further comprising:
   generating first data representing at least a portion of the first mating surface of the first component before the first component and the second component are coupled together, wherein the first model is generated using the first data; and
   generating second data representing at least a portion of the second mating surface of the second component before the first component and the second component are coupled together, wherein the second model is generated using the second data.
Example 26. The method of any of Examples 15 to 25, further comprising:
   generating a filler model to fill the gap between the first mating surface and the second mating surface after the first component and the second component are coupled together; and
   fabricating the filler based on the filler model.
Example 27. The method of any of Examples 15 to 26, wherein a three-dimensional shape of the first component changes after the first component and the second component are coupled together.
Example 28. The method of any of Examples 15 to 27, wherein the method is implemented using a computer.
Example 29. A system for implementing the method of any of Examples 15 to 28.
Example 30. A filler fabricated according to the method of any of Examples 15 to 28.
Example 31. A portion of an aircraft, comprising a filler fabricated according to the method of any of Examples 15 to 28.
Example 32. A non-transitory computer-readable medium comprising program code that, when executed by one or more processors, causes the one or more processors to perform operations comprising:
   generating a first model of a first component from first data before the first component is coupled to a second component;
   generating a second model of a second component from second data before the second component is coupled to the first component; and
   analyzing the first model and the second model to determine dimensions of a gap between a first mating surface of the first component and a second mating surface of the second component after the first component and the second component are coupled together.
Example 33. The non-transitory computer-readable medium of Example 32, wherein the operations further comprise determining an overall deviation in a normal direction between the first model and a nominal model of the first component.
Example 34. The non-transitory computer-readable medium of Example 32 or 33, wherein the operations further comprise performing a best fit alignment between the first model and the nominal model of the first component to determine the overall deviation.
Example 35. The non-transitory computer-readable medium of any of Examples 32 to 334 wherein the operations further comprise determining dimensions of the overall deviation in the normal direction.
Example 36. The non-transitory computer-readable medium of any of Examples 32 to 35, wherein the operations further comprise mapping the overall deviation from an XYZ-coordinate system to a UVW-coordinate system such that values for the dimensions of the overall deviation are represented along a W-axis.
Example 37. The non-transitory computer-readable medium of any of Examples 32 to 36, wherein the operations further comprise filtering the values for the dimensions of the overall deviation into a form deviation and a waviness deviation.
Example 38. The non-transitory computer-readable medium of any of Examples 32 to 37, wherein the filtering is performed using a low-pass filter.
Example 39. The non-transitory computer-readable medium of any of Examples 32 to 38, wherein the filtering is performed using a robust gaussian regression filter.
Example 40. The non-transitory computer-readable medium of any of Examples 32 to 39, wherein the operations further comprise modifying the nominal model by the waviness deviation such that the nominal model as modified by the waviness deviation represents the first mating surface of the first component after the first component and the second component are coupled together.
Example 41. The non-transitory computer-readable medium of any of Examples 32 to 40, wherein the operations further comprise mapping the waviness deviation from the UVW-coordinate system to the XYZ-coordinate system such that values for waviness dimensions of the waviness deviation are represented as distances relative to the nominal model.
Example 42. The non-transitory computer-readable medium of any of Examples 32 to 41, wherein:
   the operations further comprise generating a filler model to fill the gap between the first mating surface and the second mating surface after the first component and the second component are coupled together; and
   the filler is fabricated based on the filler model.
Example 43. A method for sizing a filler for fabrication, the method comprising:
   generating a first model of a first component and a second model of a second component before the first component and the second component are coupled together;
   filtering out a deformation of at least one of the first component and the second component before the first component and the second component are coupled together; and
   determining a dimension of the filler that fits between a first mating surface of the first component and a second mating surface of the second component after the first component and the second component are coupled together.

## Claims

1. A system (100) comprises:
a model generator (102) that generates a first model (104) of a first component (106) and a second model (108) of a second component (110) before the first component (106) and the second component (110) are coupled together; and
a model analyzer (112) that analyzes the first model (104) and the second model (108) to determine a dimension (114) of a gap (116) between a first mating surface (118) of the first component (106) and a second mating surface (120) of the second component (110) after the first component (106) and the second component (110) are coupled together.

2. The system (100) of Claim 1, wherein the model analyzer (112) determines an overall deviation (122) in a normal direction (150) between the first model (104) and a nominal model (124) of the first component (106).

3. The system (100) of Claim 1 or 2, wherein the model analyzer (112) performs a best fit alignment between the first model (104) and the nominal model (124) of the first component (106) to determine the overall deviation (122).

4. The system (100) of any of the preceding claims, wherein the model analyzer (112) determines an overall dimension (164) of the overall deviation (122) in the normal direction (150).

5. The system (100) of any of the preceding claims, wherein the model analyzer (112) maps the overall deviation (122) from an XYZ-coordinate system (126) to a UVW-coordinate system (128) such that values (130) for the dimensions (114) of the overall deviation (122) are represented along a W-axis (152).

6. The system (100) of any of the preceding claims, wherein the model analyzer (112) filters the values (130) for the dimensions (114) of the overall deviation (122) into a form deviation (132) and a waviness deviation (134).

7. The system (100) of any of the preceding claims, wherein the model analyzer (112) filters the values (130) using a low-pass filter (156).

8. The system (100) of any of the preceding claims, wherein the model analyzer (112) filters the values (130) using a robust gaussian regression filter (158).

9. The system (100) of any of the preceding claims, wherein:
the model analyzer (112) modifies the nominal model (124) by the waviness deviation (134); and
the nominal model (124) as modified by the waviness deviation (134) represents the first mating surface (118) of the first component (106) after the first component (106) and the second component (110) are coupled together.

10. The system (100) of any of the preceding claims, wherein the model analyzer (112) maps the waviness deviation (134) from the UVW-coordinate system (128) to the XYZ-coordinate system (126) such that values (130) for waviness dimensions (168) of the waviness deviation (134) are represented as distances (160) relative to the nominal model (124).

11. The system (100) of any of the preceding claims, further comprising a measurement system (136) to generate first data (138) representing at least a portion of the first mating surface (118) of the first component (106) and second data (140) representing at least a portion of the second mating surface (120) of the second component (110) before the first mating surface (118) and the second mating surface (120) are mated.

12. The system (100) of any of the preceding claims, wherein:
the model generator (102) generates a filler model (142) to fill the gap (116) between the first mating surface (118) and the second mating surface (120) after the first component (106) and the second component (110) are coupled together; and
a filler (144) is fabricated based on the filler model (142).

13. A method (1000) for fabricating a filler (144), the method (1000) comprising:
generating a first model (104) of a first component (106) and a second model (108) of a second component (110) before the first component (106) and the second component (110) are coupled together; and
analyzing the first model (104) and the second model (108) to determine a dimension (114) of a gap (116) between a first mating surface (118) of the first component (106) and a second mating surface (120) of the second component (110) after the first component (106) and the second component (110) are coupled together.

14. A non-transitory computer-readable medium (920) comprising program code (918) that, when executed by one or more processors (904), causes the one or more processors (904) to perform the method as defined in claim 13.

15. A method (2000) for sizing a filler (144) for fabrication, the method (2000) comprising:
generating a first model (104) of a first component (106) and a second model (108) of a second component (110) before the first component (106) and the second component (110) are coupled together;
filtering out a deformation (162) of at least one of the first component (106) and the second component (110) before the first component (106) and the second component (110) are coupled together; and
determining a dimension (114) of the filler (144) that fits between a first mating surface (118) of the first component (106) and a second mating surface (120) of the second component (110) after the first component (106) and the second component (110) are coupled together.
